# EUROPÄISCHE PATENTANMELDUNG

(11) **EP 2 626 785 A1**
(43) Veröffentlichungstag der Anmeldung: **14.08.2013**
(21) Anmeldenummer: 12154533.9
(22) Anmeldetag: 08.02.2012
(51) Int. Cl.: G06F 9/445

(54) **Verfahren zur branchenspezifischen Konfiguration eines automatisierungstechnischen Clients, Computerprogramm zur Implementation des Verfahrens und Computer mit einem solchen Computerprogramm**

(71) Anmelder: Siemens Aktiengesellschaft, 80333 München (DE)
(72) Erfinder: Pohlan, Rudolf, 76337 Waldbronn (DE)

(57) **Zusammenfassung**

Die Erfindung betrifft ein Verfahren, ein Computerprogramm und einen Computer mit einem solchen Computerprogramm zur branchenspezifischen Konfiguration eines automatisierungstechnischen Clients (16, 18), wobei in einen Speicher (24) des Clients (16, 18) eine Software (26) geladen wird, welche eine Funktionalität des Clients (16, 18) bestimmt, wobei zum Zusammenstellen und/oder Konfigurieren der in den Speicher (24) des Clients (16, 18) zu ladenden Software (26) eine Branchendatenbasis (28) und eine vorgebbare, eine Branche spezifizierende Kennung (22) ausgewertet werden, wobei die Kennung (22) kodiert, für welche Branche die branchenspezifische Konfiguration des Clients (16, 18) erfolgen soll, wobei die Branchendatenbasis (28) branchenspezifische Einträge (30) umfasst, wobei die Kennung (22) in den branchenspezifischen Einträgen (30) automatisch gesucht wird, wobei anhand eines als zur Kennung (22) zugehörig ermittelten branchenspezifischen Eintrags (30) eine Auswahl und/oder Konfiguration der in den Speicher (24) des Clients (16, 18) zu ladenden Software (26) erfolgt und wobei die Software (26) automatisch in den Speicher (24) des Clients (16, 18) geladen wird.

## Beschreibung

Die Erfindung betrifft ein Verfahren zur branchenspezifischen Konfiguration eines automatisierungstechnischen Clients. Als automatisierungstechnischer Client wird im Folgenden einerseits zum Beispiel ein Automatisierungsgerät zur Steuerung und/oder Überwachung eines technischen Prozesses sowie andererseits zum Beispiel eine Entwicklungsumgebung zum Erstellen einer Automatisierungslösung für ein Automatisierungsgerät oder ein Automatisierungssystem mit mehreren Automatisierungsgeräten zur Steuerung und/oder Überwachung eines technischen Prozesses verstanden. Im Weiteren betrifft die Erfindung auch ein Computerprogramm zur Implementierung des Verfahrens sowie einen Computer, also zum Beispiel einen ansonsten herkömmlichen, sogenannten Personalcomputer, mit einem solchen Computerprogramm.

Zur Automatisierung technischer Prozesse, insbesondere industrieller Anlagen, kommen speicherprogrammierbare Steuerungen oder andere Automatisierungsgeräte wie zum Beispiel Prozessrechner und dergleichen zum Einsatz. Einerseits aus Kostengründen und andererseits aus logistischen Gründen stehen Hersteller von Automatisierungsgeräten vor der Frage, wie sich möglichst ein gemeinsames Automatisierungsgerät für den Einsatz in verschiedenen Einsatzbereichen entwickeln lässt. Typische Einsatzbereiche sind die Steuerungstechnik, Antriebstechnik, Gebäudeleittechnik, Verfahrenstechnik oder die Kraftwerkstechnik usw. Wegen der für jeden Einsatzbereich mitunter stark variierenden Anforderungen sind branchenspezifische Ausprägungen von Automatisierungsgeräten und der jeweils zugehörigen Soft- und Firmware, wie zum Beispiel für die Automobilindustrie, die pharmazeutische Industrie oder die chemische Industrie usw., notwendig geworden.

Das Ziel, die möglichst universelle Verwendbarkeit eines Automatisierungsgeräts über die Grenzen der Einsatzgebiete und Branchen hinweg zu erleichtern, zieht das eigentliche Problem nach sich: Die softwaretechnischen Programmier-, Parametrier- und Projektierungswerkzeuge, die in der Fachterminologie zusammenfassend als sogenannte Engineering-Tools bezeichnet werden, und die Laufzeitsysteme für ein Automatisierungsgerät müssen so generisch entwickelt werden, dass für die verschiedenen Anwendungsgebiete und Branchen keine spezifischen Ausprägungen und damit keine Doppelentwicklungen notwendig sind. Dieser generischen Auslegung von einzelnen Basisfunktionalitäten für einen Betrieb eines Automatisierungsgeräts (Laufzeitsystem) oder zum Erstellen einer Automatisierungslösung für ein solches Automatisierungsgerät (Engineering-Tools) steht die Forderung nach einer möglichst optimalen Unterstützung der in jeder einzelnen Branche vorherrschenden spezifischen Anforderungen gegenüber.

Als Beispiel für eine im Stand der Technik bekannte branchenspezifische Konfiguration eines Automatisierungsgeräts kann die wenn auch seltene Verwendung einer speicherprogrammierbaren Steuerung für verfahrenstechnische Aufgaben angesehen werden. Der Benutzer muss in diesen Fällen allerdings Einschränkungen hinnehmen und zudem fehlende Systemleistungen, die von einem dedizierten System standardmäßig zur Verfügung gestellt würden, selbst applikativ implementieren. Teilweise werden auch spezielle Engineering-Tools angeboten, die den Einsatz einer speicherprogrammierbaren Steuerung auch für verfahrenstechnische Aufgaben oder andere Bereiche ermöglichen sollen. Allerdings ist dies mit dem Nachteil verbunden, dass dem Hersteller dafür zusätzliche Entwicklungskosten, nämlich einmal die Entwicklungskosten für die Engineering-Tools für verfahrenstechnische Aufgaben und die Entwicklungskosten für die Engineering-Tools für jedes weitere Anwendungsgebiet, entstehen.

Eine gemeinsame, durchgängige Verwendbarkeit von Engineering-Tools für verschiedene Anwendungsgebiete, wie zum Beispiel Antriebstechnik, Gebäudeleittechnik oder Verfahrenstechnik, wird heute durch einen einfachen Verteilmechanismus für verschiedene Zielsysteme unterstützt. Allerdings wird dabei ein Zielsystemtyp nur für ein Anwendungsgebiet und nicht für mehrere Anwendungsgebiete unterstützt. Ein Zielsystemtyp ist dabei zum Beispiel eine speicherprogrammierbare Steuerung. Bei bekannten Verteilmechanismen ist zum Beispiel für Anwendungen in der Fertigungsindustrie eine speicherprogrammierbare Steuerung der einzige Zielsystemtyp, während ein Prozessrechner als Beispiel für einen anderen Zielsystemtyp ausschließlich zum Beispiel bei Anwendungen im Bereich der Leittechnik zur Verfügung steht.

Nachdem ein differenziertes Verhalten für den Einsatz eines Automatisierungsgeräts oder Automatisierungsgerätetyps in verschiedenen Anwendungsbereichen oder Branchen heute generisch noch nicht optimal unterstützt wird, besteht eine Aufgabe der vorliegenden Erfindung entsprechend darin, ein geeignetes softwaretechnisches Verfahren anzugeben, das Gemeinsamkeiten und zugleich Besonderheiten sowie insbesondere branchenspezifische Aspekte durch entsprechende softwaretechnische Werkzeuge (Engineering-Tools) und Laufzeitsysteme unterstützt.

Diese Aufgabe wird erfindungsgemäß mit einem Verfahren mit den Merkmalen des Anspruchs 1 gelöst. Dabei ist bei einem Verfahren zur branchenspezifischen Konfiguration eines automatisierungstechnischen Clients, also insbesondere einem Automatisierungsgerät oder einer Entwicklungsumgebung, wobei in einen Speicher des Clients eine Software geladen wird, welche eine Funktionalität des Clients bestimmt, Folgendes vorgesehen:
Zum Zusammenstellen und/oder Konfigurieren der in den Speicher des Clients zu ladenden Software wird eine Branchendatenbasis und eine vorgebbare, eine Branche spezifizierende Kennung ausgewertet. Die Kennung kodiert, für welche Branche die branchenspezifische Konfiguration des Clients erfolgen soll. Die Branchendatenbasis umfasst branchenspezifische Einträge. Die Kennung wird in den branchenspezifischen Einträgen gesucht. Anhand eines als zur Kennung zugehörig ermittelten branchenspezifischen Eintrags erfolgt eine Auswahl und/oder Konfiguration der in den Speicher des Clients zu ladenden Software und die Software wird abschließend automatisch in den Speicher des Clients geladen.

Zur Erläuterung des grundsätzlichen Prinzips der hier beschriebenen Erfindung, wie oben definiert, sind einzelne Definitionen erforderlich. Zum einen kommt als automatisierungstechnischer Client ein Gerät, also zum Beispiel ein Automatisierungsgerät, ein Prozessrechner usw., in Betracht. Zum anderen kommt als automatisierungstechnischer Client auch eine Software, nämlich insbesondere eine Entwicklungsumgebung, in Betracht. Dennoch wird bei beiden Ausprägungen eines automatisierungstechnischen Clients von einem Speicher und einer in den Speicher des jeweiligen Clients zu ladenden Software gesprochen. Bei einem Client in Form eines Gerätes ist dieser Speicher der vom Gerät umfasste Hardwarespeicher. Bei einem Client in Form einer Software ist dieser Speicher entweder die Software selbst und der von dieser belegte Speicherplatz, nämlich zum Beispiel dann, wenn es sich bei der in diesen Speicher zu ladenden Software zum Beispiel um eine Parametrierung des jeweiligen Clients handelt und entsprechend zumindest ein Datum innerhalb der Software auf den jeweils mit der Parametrierung vorgegebenen Wert geändert wird. Andererseits kann ein als Software vorliegender automatisierungstechnischer Client durch weitere Softwaremodule geändert oder ergänzt werden. Auch das Austauschen oder Hinzufügen von Softwaremodulen eines derartigen automatisierungstechnischen Clients wird hier und im Folgenden als das Laden einer Software in den Speicher eines solchen Clients bezeichnet.

Die Branchendatenbasis umfasst branchenspezifische Einträge, die für eine branchenspezifische Konfiguration eines automatisierungstechnischen Clients verwendbar sind. Diese Einträge umfassen direkt oder indirekt, nämlich zum Beispiel durch Verweis auf einen Speicherbereich außerhalb der Branchendatenbasis, zum Beispiel jeweils zumindest einen Parameter, mit dem eine branchenspezifische Konfiguration des jeweiligen automatisierungstechnischen Clients erfolgen kann. Ein branchenspezifischer Eintrag kann alternativ oder zusätzlich und ebenfalls direkt oder indirekt auch ausführbaren Code umfassen, mit dem zum Beispiel die Funktionalität eines Automatisierungsgeräts oder einer Entwicklungsumgebung angepasst oder ergänzt werden kann. Ein weiteres Beispiel für Daten, wie sie von einem branchenspezifischen Eintrag in der Branchendatenbasis direkt oder indirekt umfasst sein können, sind Daten, die eine Bedieneroberfläche oder eine Menüstruktur entsprechend der branchenspezifischen Anforderungen oder Gegebenheiten vorgeben oder anpassen.

Anhand der jeweils vorgegebenen Kennung, wobei das Vorgeben der Kennung zum Beispiel im Rahmen einer Benutzerauswahl erfolgt, werden branchenspezifische Einträge in der Branchendatenbasis gesucht. Das Identifizieren von branchenspezifischen Einträgen in der Branchendatenbasis anhand der Kennung, also das Ermitteln von zu der Kennung gehörigen oder zu der Kennung passenden branchenspezifischen Einträgen, kann anhand einer jeweiligen Bezeichnung des branchenspezifischen Eintrags und einem Vergleich dieser Bezeichnung mit der Kennung erfolgen. Bei einem solchen Vergleich muss nicht notwendig Identität von Kennung und Bezeichnung festgestellt werden, sondern es reicht zum Beispiel auch aus, dass die Kennung einen Teil der Bezeichnung bildet. Insgesamt erfolgt auf diese Weise eine Auswahl und/oder Konfiguration der in den Speicher des jeweiligen Clients zu ladenden Software. Diese wird abschließend automatisch in den Speicher des jeweiligen Clients geladen.

Wenn diese Software Parametrierdaten umfasst, erfolgt mit dem Laden der Software in den Speicher des jeweiligen Clients eine entsprechende Parametrierung der dort bereits vorhandenen Software. Wenn die ausgewählte Software ausführbaren Code umfasst, wird dieser an vorgegebene Stellen in den Speicher des jeweiligen automatisierungstechnischen Clients geladen und dabei die dort bereits vorhandene Software ergänzt, ersetzt oder modifiziert. Wenn die so ausgewählte Software andere Daten umfasst, zum Beispiel Bedienungsanleitungen und dergleichen, werden diese Daten ebenfalls in den Speicher des jeweiligen automatisierungstechnischen Clients geladen und zwar an Speicherstellen, die bereits in den branchenspezifischen Einträgen der Branchendatenbasis vorgegeben sind.

Der Vorteil der Erfindung besteht aus Anwendersicht vor allem darin, dass durch eine einfache und einmalige Spezifikation einer Branche, nämlich über die oben bereits erwähnte Kennung, für einen automatisierungstechnischen Client, also insbesondere einerseits ein Automatisierungsgerät oder andererseits eine Entwicklungsumgebung, systemseitig automatisch alle Vorkehrungen getroffen werden, um eine branchenspezifische Anpassung für diesen Client zu generieren und zu unterstützen. Aus Herstellersicht entstehen deutlich geringere Entwicklungs- und Produktionskosten, weil für verschiedene Anwendungsgebiete, wie zum Beispiel Steuerungs- und Antriebstechnik, zum Beispiel nur ein Automatisierungsgerät entwickelt werden muss, ohne dessen Leistungsfähigkeit gegenüber dedizierten Geräten einzuschränken. Bei einer Entwicklungsumgebung (Engineering-System mit Engineering-Tools) als in dieser Weise anpassbarem automatisierungstechnischem Client wird gerade bei Hybridanlagen die Durchgängigkeit deutlich verbessert. Ein Automatisierungsgerätetyp ist jetzt für mehrere Branchen einsetzbar. Trotzdem kann jeweils eine optimale branchenspezifische Unterstützung gewährleistet werden. Eine Skalierbarkeit des Verfahrens insgesamt ist deshalb gegeben, weil sich beliebig viele Branchenpakete und aus den Branchenpaketen branchenspezifische Einträge in der Branchendatenbasis auch nachträglich anmelden und damit in das Verfahren integrieren lassen. Insgesamt ist die Automatisierungshardware damit flexibler und breiter einsetzbar. Dies gilt beispielsweise für speicherprogrammierbare Steuerungen als ein Beispiel für einen automatisierungstechnischen Client, die bisher vornehmlich in der Fertigungsindustrie zum Einsatz kommen. Für die Kunden der Hersteller von Leittechnik und Automatisierungstechnik ergeben sich Kostenvorteile bei der Beschaffung sowie logistische Vorteile in der Lagerhaltung der Automatisierungskomponenten. Speicherprogrammierbare Steuerungen können zum Beispiel auch im Rahmen eines verteilten Leitsystems in der Prozessleittechnik (Distributed Control System; DCS) zum Einsatz kommen, weil mit Hilfe des hier vorgeschlagenen Verfahrens das jeweilige Automatisierungsgerät spezifisch für den jeweiligen Einsatzbereich konfiguriert werden kann.

Vorteilhafte Ausgestaltungen der Erfindung sind Gegenstand der Unteransprüche.

Wenn die branchenspezifischen Einträge in der Branchendatenbasis hierarchisch strukturiert sind, lassen sich Abhängigkeiten einzelner branchenspezifischer Einträge von anderen branchenspezifischen Einträgen leicht formulieren, nämlich durch die jeweilige hierarchische Struktur. Solche Abhängigkeiten können dafür verwendet werden, dass bei einem als zur jeweiligen Kennung zugehörig ermittelten branchenspezifischen Eintrag auch andere Einträge, von denen der ursprünglich ermittelte branchenspezifische Eintrag direkt oder indirekt gemäß der jeweiligen Hierarchie abhängig ist, ebenfalls zur Auswahl und/oder Konfiguration der in den Speicher des jeweiligen Clients zu ladenden Software herangezogen wird.

Wenn die branchenspezifischen Einträge zur hierarchischen Strukturierung in einem softwaretechnischen Baum organisiert sind, ergibt sich eine vergleichsweise einfache und besonders übersichtliche Struktur. Ein als zur jeweiligen Kennung zugehörig ermittelter branchenspezifischer Eintrag der Branchendatenbasis ist von allen in dem softwaretechnischen Baum in Richtung auf dessen Wurzel vorangehenden branchenspezifischen Einträgen abhängig, so dass die aufgrund dieser Abhängigkeit ermittelten vorangehenden branchenspezifischen Einträge ebenfalls zur Auswahl und/oder Konfiguration der in den Speicher des Clients zu ladenden Software herangezogen werden können. Ein besonderer Vorteil des hier und im Folgenden vorgestellten Verfahrens besteht darin, dass anhand der vorgegebenen Kennung und der Branchendatenbasis gleichzeitig oder quasi gleichzeitig ein erster und ein zweiter automatisierungstechnischer Client, nämlich ein Automatisierungsgerät als erster Client und eine Entwicklungsumgebung als zweiter Client, konfigurierbar sind. Auf diese Weise ergibt sich nicht nur ein einzelner branchenspezifischer Client, sondern zumindest ein funktional zusammengehöriges Paar branchenspezifischer Clients, wobei das Automatisierungsgerät als erster Client mit der Entwicklungsumgebung als zweitem Client in an sich bekannter Art und Weise programmierbar, konfigurierbar und/oder parametrierbar ist. Auf diese Weise ist also nicht nur eine Anpassung eines Gerätes an die jeweiligen branchenspezifischen Erfordernisse möglich, zusätzlich wird anhand der gleichen Kennung, also zum Beispiel parallel zu der Konfiguration des ersten Clients, die Entwicklungsumgebung als zweiter Client passend konfiguriert. Der Benutzer wird mit Details der jeweiligen Konfiguration nicht belastet, kann sich aber darauf verlassen, dass die automatisch generierte Entwicklungsumgebung einerseits den branchenspezifischen Anforderungen genügt und andererseits optimal zu dem automatisch konfigurierten Automatisierungsgerät und dessen im Rahmen der Konfiguration festgelegten oder modifizierten Funktionalität passt.

Bei einer besonderen Ausführungsform des Verfahrens ist vorgesehen, dass zur Konfiguration eines oder mehrerer automatisierungstechnischer Clients eine Konfigurationsdatenbasis verwendet wird, welche Softwaremodule und/oder Konfigurationsdatensätze umfasst. Ein Zugriff auf oder eine Auswahl einzelner Softwaremodule oder Konfigurationsdatensätze erfolgt sodann anhand der vorgegebenen und die jeweilige Branche spezifizierenden Kennung oder eines dazu ermittelten Eintrags der Branchendatenbasis oder hierarchisch übergeordneter Einträge. Bei einem Zugriff auf die Konfigurationsdatenbasis anhand der Kennung umfassen die Softwaremodule oder Konfigurationsdatensätze jeweils eine Bezeichnung, wie dies oben für die branchenspezifischen Einträge erläutert wurde. Bei einem Zugriff anhand einzelner jeweils zu einer Kennung in der Branchendatenbasis ermittelter branchenspezifischer Einträge kann der jeweilige branchenspezifische Eintrag ein oder mehrere Softwaremodule oder Konfigurationsdatensätze referenzieren, zum Beispiel anhand von deren Adressen in der Konfigurationsdatenbasis oder anhand von symbolischen Bezeichnern, die eine Ermittlung der jeweiligen Adressen in der Konfigurationsdatenbasis erlauben.

Die Branchendatenbasis kann damit vergleichsweise klein gehalten werden und muss nicht notwendig branchenspezifische ausführbare Software, branchenspezifische Parameter usw. umfassen. Es reicht insofern aus, wenn die Branchendatenbasis mit ihren Einträgen Daten umfasst, die als Verweis auf die in der Konfigurationsdatenbasis vorgehaltenen Daten verwendet werden können. Durch diese Entkopplung ist es möglich, in die Konfigurationsdatenbasis entsprechend der jeweiligen Erfordernisse Änderungen einzupflegen, zum Beispiel Softwareaktualisierungen, ohne dass gleichzeitig eine Änderung der Branchendatenbasis erforderlich wäre. Umgekehrt lassen sich auch Änderungen an der Branchendatenbasis durchführen, ohne dass dies unmittelbar die Konfigurationsdatenbasis betrifft oder beeinflusst.

Die Datensätze der Konfigurationsdatenbasis, also insbesondere Softwaremodule und/oder Konfigurationsdatensätze, können abschließend nach deren Auswahl zur automatischen Konfiguration des jeweiligen Clients verwendet werden.

Die oben genannte Aufgabe wird auch mit einem Computer, zum Beispiel einem sogenannten Personalcomputer, gelöst, der nach dem Verfahren wie hier und im Folgenden beschrieben arbeitet und zur branchenspezifischen Konfiguration eines automatisierungstechnischen Clients Mittel zur Durchführung des Verfahrens, nämlich ein Computerprogramm, mit dem das Verfahren realisiert ist, umfasst. Die Erfindung ist demnach in Software implementiert und damit einerseits auch ein solches Computerprogramm mit durch einen Computer ausführbaren Programmcodeanweisungen und andererseits ein Speichermedium mit einem derartigen Computerprogramm sowie schließlich auch ein Computer, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine schematisch vereinfachte Darstellung einzelner an dem hier vorgestellten Verfahren beteiligter Einheiten, nämlich automatisierungstechnischer Clients als Ziel für die branchenspezifische Anpassung und eine Branchendatenbasis mit diesbezüglichen Daten,
- FIG 2: die Branchendatenbasis mit davon umfassten branchenspezifischen Einträgen,
- FIG 3: eine vereinfachte und hierarchische Darstellung unterschiedlicher Branchen, die als Auswahlmöglichkeit bei dem hier vorgestellten Verfahren in Betracht kommen,
- FIG 4: einen softwaretechnischen Baum mit branchenspezifischen Einträgen als Möglichkeit für eine hierarchische Strukturierung solcher branchenspezifischer Einträge,
- FIG 5: eine Konfigurationsdatenbasis mit Softwaremodulen und Konfigurationsdatensätzen als möglichem Speicherort für die bei der branchenspezifischen Anpassung verwendbaren Daten,
- FIG 6: eine schematisch vereinfachte Darstellung einer Ausführungsform, bei der die Funktionalität zur branchenspezifischen Anpassung eines Clients vom jeweiligen Client selbst umfasst ist,
- FIG 7: eine schematisch vereinfachte Darstellung einer resultierenden Softwarearchitektur und
- FIG 8: eine Kombination der Funktionalität zur branchenspezifischen Anpassung eines Clients mit zumindest einem anderen Verteilsystem.

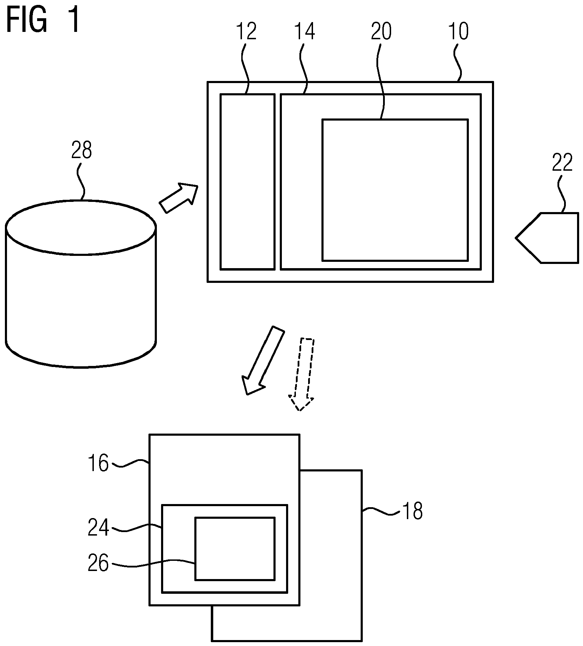

FIG 1 zeigt schematisch vereinfacht in einer auf Funktionsblöcke reduzierten Darstellung einen Computer 10, also zum Beispiel einen an sich bekannten sogenannten Personalcomputer. Dieser umfasst in ebenfalls an sich bekannter Art und Weise eine Verarbeitungseinheit 12 in Form von oder nach Art eines Mikroprozessors sowie einen Speicher 14, in den zur Implementation des hier und im Folgenden mit weiteren Details beschriebenen Verfahrens zur branchenspezifischen Konfiguration eines automatisierungstechnischen Clients 16, 18 ein Computerprogramm 20 geladen ist.

Die branchenspezifische Konfiguration des jeweiligen automatisierungstechnischen Clients 16, 18 oder mehrerer solcher Clients 16, 18 erfolgt anhand einer eine Branche spezifizierenden Kennung 22. Die Kennung kodiert, für welche Branche die branchenspezifische Konfiguration des jeweiligen Clients 16, 18 erfolgen soll.

Als Client 16, 18 kommt dabei zum Beispiel ein Automatisierungsgerät, nämlich ein Automatisierungsgerät zur Steuerung und/oder Überwachung technischer Prozesse, also zum Beispiel eine speicherprogrammierbare Steuerung, in Betracht. Die branchenspezifische Konfiguration eines Automatisierungsgeräts bezieht sich vor allem auf dessen sogenanntes Laufzeitsystem (Runtime-System). Als Client 16, 18 kommt aber zum Beispiel auch eine Entwicklungsumgebung zum Erstellen, Modifizieren und Warten von Automatisierungslösungen, wie sie von Automatisierungsgeräten, nämlich zum Beispiel speicherprogrammierbaren Steuerungen, zur Steuerung und/oder Überwachung technischer Prozesse ausgeführt werden, in Betracht. Der Computer 10 kann dabei ein vom jeweiligen automatisierungstechnischen Client 16, 18 unabhängiges Gerät, aber auch der automatisierungstechnische Client 16, 18 selbst, also zum Beispiel ein Automatisierungsgerät oder im Falle einer Entwicklungsumgebung das Gerät/der Computer, auf dem die Entwicklungsumgebung ausgeführt wird, sein.

Für den oder jeden automatisierungstechnischen Client 16, 18 erfolgt dessen branchenspezifische Konfiguration in Bezug auf einen jeweiligen Speicher 24 des Clients 16, 18. Bei einem Automatisierungsgerät als Client 16 ist dieser Speicher 24 der vom jeweiligen Gerät umfasste Hardwarespeicher. Bei einer Entwicklungsumgebung als Client 18 ist dieser Speicher 24 - wie eingangs bereits erläutert - der von der als Softwareprogramm ausgeführten Entwicklungsumgebung belegte oder belegbare Speicher.

Zum Zusammenstellen und/oder Konfigurieren einer in den Speicher 24 des jeweiligen Clients 16, 18 zu ladenden Software 26 werden eine Branchendatenbasis 28 und die Kennung 22, mit der kodiert ist, für welche Branche die branchenspezifische Konfiguration des Clients 16, 18 erfolgen soll, ausgewertet.

Der Begriff Software ist bei der verwendeten Formulierung einer zur branchenspezifischen Konfiguration eines Clients 16, 18 in dessen Speicher 24 zu ladenden Software 26 als generischer Begriff zu verstehen und steht unter anderem für ausführbaren Code, also zum Beispiel eine Laufzeitumgebung oder eine Funktionalität in einer oder für eine Laufzeitumgebung, ausführbaren Code in einer oder für eine Entwicklungsumgebung, Parameter zur Konfiguration einer Laufzeitumgebung/Entwicklungsumgebung, eine Bedienoberfläche für eine Laufzeitumgebung/Entwicklungsumgebung, eine Menüstruktur und/oder die Bezeichnung von Elementen innerhalb einer Menüstruktur für eine Laufzeitumgebung/Entwicklungsumgebung und so weiter. Alle diese jeweils Daten und damit Software 26 im weitesten Sinne darstellenden Einheiten werden im Folgenden unter dem Begriff Software 26 zur branchenspezifischen Konfiguration eines automatisierungstechnischen Clients 16, 18 zusammengefasst.

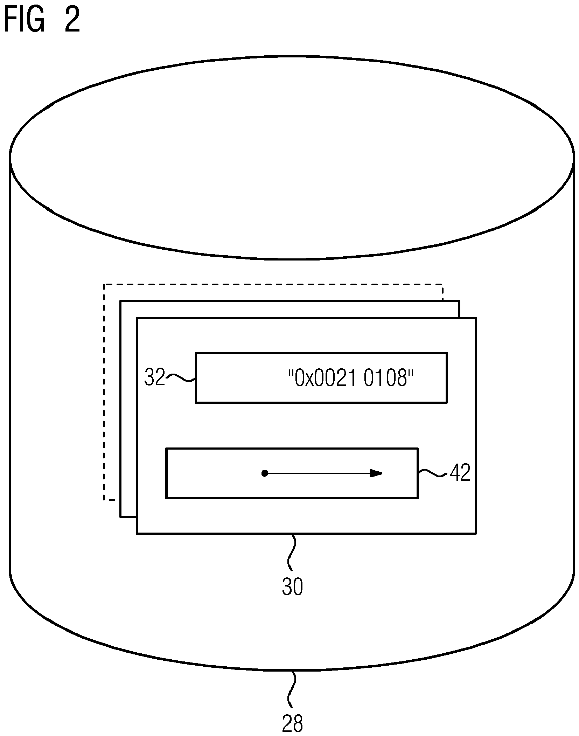

FIG 2 zeigt die Branchendatenbasis 28 mit weiteren Details. Danach umfasst die Branchendatenbasis 28 zumindest einen branchenspezifischen Eintrag 30, normalerweise eine Vielzahl branchenspezifischer Einträge 30. Jeder branchenspezifische Eintrag 30 in der Branchendatenbasis 28 umfasst eine Bezeichnung 32. Als Beispiel für eine solche Bezeichnung 32 ist in FIG 1 symbolisch ein hexadezimal angegebener numerischer Wert gezeigt: "0x0021 0108". Diese Bezeichnung 32 ist unter anderem vorgesehen, damit mit der die jeweilige Branche, für welche die branchenspezifische Konfiguration des Clients 16, 18 erfolgen soll, kodierenden Kennung 22 (FIG 1) eine Auswahl einzelner oder mehrerer branchenspezifischer Einträge 30 in der Branchendatenbasis 28 getroffen werden kann. Kurz gefasst lässt sich dies als Suchen der Kennung 22 in den branchenspezifischen Einträgen 30 beschreiben. Hier erfolgt die Suche der jeweiligen Kennung 22 in den von den branchenspezifischen Einträgen 30 umfassten Bezeichnungen 32. Anhand eines als zur jeweiligen Kennung 22 zugehörig ermittelten branchenspezifischen Eintrags 30 kann sodann eine Auswahl und/oder Konfiguration der in den Speicher 24 des Clients 16, 18 zu ladenden Software 26 und schließlich das automatische Laden der jeweiligen Software 26 in diesen Speicher 24 erfolgen.

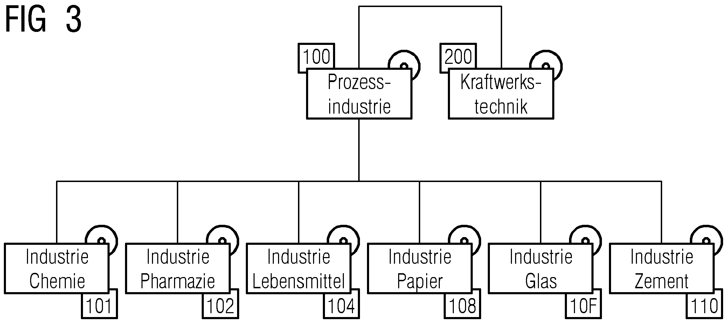

FIG 3 zeigt eine schematisch vereinfachte und hierarchisch strukturierte Darstellung unterschiedlicher Branchen, für die der Einsatz automatisierungstechnischer Clients 16, 18 in Frage kommen kann. Jede dieser Branchen kann zur automatischen Auswahl einer branchenspezifischen Konfiguration für einen automatisierungstechnischen Client 16, 18 mit einem Bezeichner versehen sein, der im Grunde im Wesentlichen die in FIG 3 jeweils dargestellte natürlichsprachliche Bezeichnung, also zum Beispiel "Industrie Papier" durch eine automatisch auswertbare Bezeichnung ersetzt. Für die dargestellten Branchen als Untergruppe der Branche "Prozessindustrie" kann zum Beispiel angenommen werden, dass Bezeichner wie folgt vergeben sind: "Industrie Chemie"=101; "Industrie Pharmazie"=102; "Industrie Lebensmittel"=104; "Industrie Papier"=108; ""Industrie Glas"=10F; "Industrie Zement"=110. Eine übergeordnete Branche, nämlich hier zum Beispiel "Prozessindustrie", erhält einen übergeordneten Bezeichner, hier "100". Die hinter den jeweils einzelne Branchen darstellenden Blöcke gezeigten Symbole sollen Datenträger, also insbesondere eine CompactDisc, darstellen und damit darauf hinweisen, dass die Anzahl der auswählbaren Branchen jederzeit durch Registrierung einer weiteren Branche in dem Computerprogramm 20 ergänzt werden kann. Gleiches, also die Möglichkeit, Änderungen und Ergänzungen vorzunehmen, gilt auch für die branchenspezifischen Einträge 30 in der Branchendatenbasis 28 und ebenso für alle Daten zumindest einer weiter unten noch erläuterten Datenbasis.

Wenn ein Benutzer eine branchenspezifische Konfiguration eines automatisierungstechnischen Clients 16, 18 veranlassen möchte, wählt er die jeweils relevante Branche aus. Dies kann selbstverständlich erfolgen, indem dem Benutzer in einem Auswahlmenü lesbare Bezeichnungen für die einzelnen Branchen präsentiert werden, also zum Beispiel "Prozessindustrie"; "Industrie Papier"; "Industrie Glas" usw. Die jeweilige Auswahl wird von dem Computerprogramm 20, mit dem das hier vorgestellte Verfahren implementiert ist, in eine Kennung 22 umgewandelt, zum Beispiel eine numerische Kennung, also zum Beispiel den Zahlenwert "108" bei Auswahl der Branche "Industrie Papier". Mit einer derartigen Kennung kann in der Branchendatenbasis 28 ein branchenspezifischer Eintrag 30 oder eine Mehrzahl branchenspezifischer Einträge 30 gesucht werden.

Bei der in den Figuren dargestellten Ausführungsform ist vorgesehen, dass dafür die Kennung 22 in den branchenspezifischen Einträgen 30 automatisch gesucht wird, also zum Beispiel in den von einem jeden branchenspezifischen Eintrag 30 umfassten Bezeichnungen 32. Nachdem der in FIG 2 dargestellte branchenspezifische Eintrag 30 in seiner Bezeichnung 32 und den dortigen niederwertigen Bits den Zahlenwert "0108" umfasst, kann dieser Eintrag 30 als zur Kennung 22 zugehörig angenommen werden. Dies kann auch für weitere, nicht dargestellte Einträge 30 zutreffen.

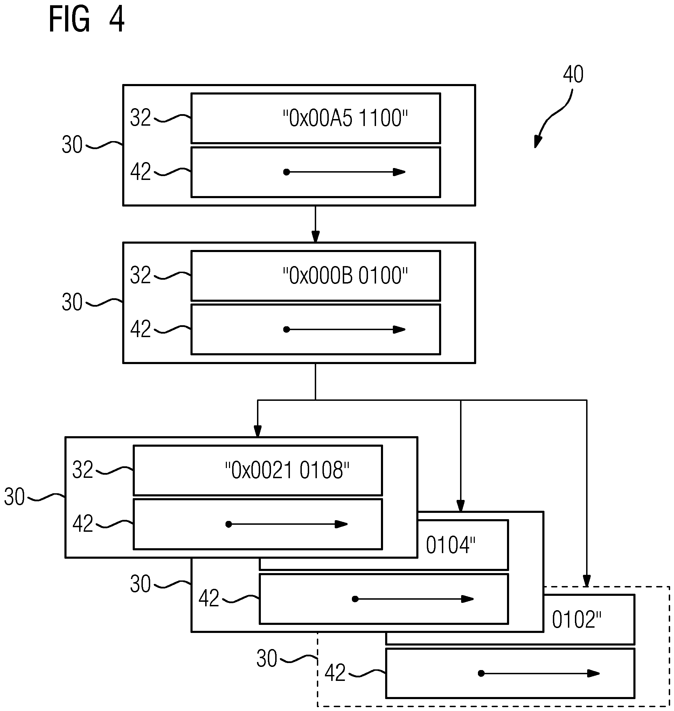

FIG 4 zeigt, dass die branchenspezifischen Einträge 30 in der Branchendatenbasis 28 (FIG 2) in gleicher oder ähnlicher Weise hierarchisch strukturiert sein können, wie dies in FIG 3 exemplarisch für einzelne Branchen dargestellt ist. Die hierarchische Struktur ist in FIG 4 ein softwaretechnischer Baum 40. Bei einer solchen Struktur der branchenspezifischen Einträge 30 in der Branchendatenbasis 28 kann die Auswahl und/oder Konfiguration der in den Speicher 24 des Clients 16, 18 zu ladenden Software 26 anhand des als zur jeweiligen Kennung 22 zugehörig ermittelten Eintrags 30 und jedes diesem Eintrag 30 in der jeweiligen Hierarchie übergeordnetem Eintrag 30 erfolgen. Beim dargestellten Beispiel führt also eine Kennung 22 mit dem numerischen Wert "108" zur Auswahl des branchenspezifischen Eintrags 30, der mit seiner Bezeichnung 32 zu dieser Kennung 22 passt, im dargestellten Beispiel also zur Auswahl des branchenspezifischen Eintrags mit "0x0021 0108" als numerischem Wert von dessen Bezeichnung 32. Diesem branchenspezifischen Eintrag 30 gehen bei der Darstellung in FIG 4 zumindest zwei weitere branchenspezifische Einträge 30 hierarchisch voran, nämlich die branchenspezifischen Einträge mit den numerischen Werten "0x000B 0100" beziehungsweise "0x00A5 1100" für deren Bezeichnung 32. Für eine inhaltliche Entsprechung einer Auswahl auch solcher branchenspezifischer Einträge 30, die einem zu einer Kennung 22 passenden Eintrag 30 vorangehen, kann man sich vor Augen führen, dass für eine branchenspezifische Anpassung eines automatisierungstechnischen Clients 16, 18 für die Papierindustrie (FIG 3) auch alle diejenigen Anpassungen vorgenommen werden müssen, die bei einer Auswahl der übergeordneten Branche, hier also der Prozessindustrie, notwendig gewesen wären.

Nicht behandelt wurde bisher, dass jeder branchenspezifische Eintrag 30 in der Branchendatenbasis 28 entweder die für die branchenspezifische Konfiguration des jeweiligen automatisierungstechnischen Clients 16, 18 erforderlichen Daten selbst oder eine Referenz auf solche Daten umfasst. Beide Varianten sind denkbar. Dargestellt ist hier eine Ausführungsform, bei der jeder branchenspezifische Eintrag 30 eine Referenz 42 (FIG 2, FIG 4) auf solche Daten umfasst. Dargestellt ist diese Referenz 42 hier durch einen Pfeil, der symbolisieren soll, dass die Referenz 42 auf einen Speicherort außerhalb der Branchendatenbasis 28, zumindest außerhalb des jeweiligen branchenspezifischen Eintrags 30, verweist.

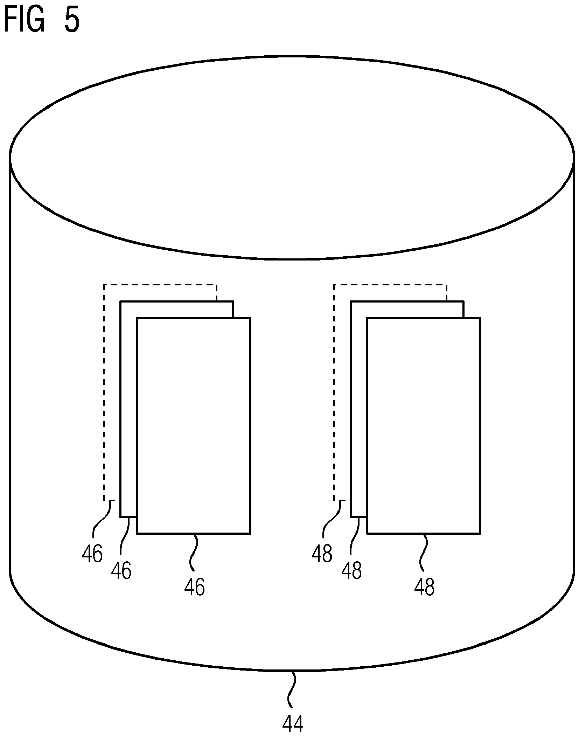

Die Verwendung von Referenzen 42 in der Branchendatenbasis 28 und deren branchenspezifischen Einträgen 30 erlaubt die Entkopplung von den zur branchenspezifischen Konfiguration eines jeweiligen automatisierungstechnischen Clients 16, 18 zu verwendenden Daten von der Branchendatenbasis 28 oder zumindest von den jeweiligen Einträgen 30. Dafür kann neben der Branchendatenbasis 28 (FIG 2) auch eine Konfigurationsdatenbasis 44 (FIG 5) vorgesehen sein; allerdings kann die Konfigurationsdatenbasis 44 auch Teil der Branchendatenbasis 28 sein.

Die Konfigurationsdatenbasis 44 umfasst zumindest ein Softwaremodul 46 für eine branchenspezifische Konfiguration eines automatisierungstechnischen Clients 16, 18 und/oder zumindest einen Konfigurationsdatensatz 48, üblicherweise eine Mehrzahl von Softwaremodulen 46 und eine Mehrzahl von Konfigurationsdatensätzen 48. Ein oder mehrere Softwaremodule 46 und/oder ein oder mehrere Konfigurationsdatensätze 48 werden aus der Konfigurationsdatenbasis 44 anhand der Kennung 22 oder eines dazu ermittelten Eintrags 30 der Branchendatenbasis 28 oder hierarchisch übergeordneter Einträge ausgewählt, nämlich zum Beispiel indem das jeweilige Softwaremodul 46 beziehungsweise der jeweilige Konfigurationsdatensatz 48 durch eine Referenz 42 eines branchenspezifischen Eintrags 30 in der Branchendatenbasis 28 identifiziert wird. Jedes auf diese Weise ausgewählte Softwaremodul 46 und jeder auf diese Weise ausgewählte Konfigurationsdatensatz 48 wird zur Konfiguration des jeweiligen automatisierungstechnischen Clients 16, 18 verwendet, indem das oder jedes ausgewählte Softwaremodul 46 und der oder jeder ausgewählte Konfigurationsdatensatz 48 zusammengefasst als Software 26 in den Speicher 24 des jeweiligen Clients 16, 18 geladen werden.

Bei einem Softwaremodul 46 oder einer Mehrzahl von Softwaremodulen 46 entspricht gemäß der hier gewählten Terminologie, nämlich dem Laden von Software 26 in den Speicher 24 des Clients 16, 18, dieses Laden unmittelbar dem Laden des oder jedes Softwaremoduls 46 in den Speicher 24. Bei einem oder mehreren Konfigurationsdatensätzen 48 entspricht das Laden der durch den oder jeden Konfigurationsdatensatz 48 gegebenen Software 26 in den Speicher 24 dem Eintragen von jeweils zumindest einem Konfigurationsdatum an eine entsprechende Speicherstelle im Speicher 24.

Ein Beispiel für die in der Konfigurationsdatenbasis 44 auswählbaren Softwaremodule 46 sind Werkzeuge, nämlich zum Beispiel Editoren, Compiler und Lader, wobei zum Beispiel ein Editor oder ein Compiler zur Verwendung in einer Entwicklungsumgebung als automatisierungstechnischem Client 16, 18 und ein Lader als Werkzeug in einem Automatisierungsgerät als automatisierungstechnischem Client 16, 18 in Betracht kommt. Die exemplarische Nennung dieser drei Werkzeuge macht auch deutlich, dass anhand der vorgegebenen Kennung 22 und zumindest der Branchendatenbasis 28, gegebenenfalls der Branchendatenbasis 28 in Verbindung mit der Konfigurationsdatenbasis 44, ein erster und ein zweiter automatisierungstechnischer Client 16, 18, nämlich ein Automatisierungsgerät als erster Client 16, 18 und eine Entwicklungsumgebung als zweiter Client 16, 18, gleichzeitig oder zumindest im selben Arbeitsgang konfiguriert werden können. Dabei fungieren zum Beispiel ein auf eine bestimmte Branche optimierter Editor und Compiler als branchenspezifische Anpassung einer Entwicklungsumgebung und ein zu den branchenspezifischen Anpassungen zumindest des Compilers passender Lader als branchenspezifische Anpassung eines Automatisierungsgerätes. Damit ist gewährleistet, dass mit der Entwicklungsumgebung erstellte (Editor, Compiler) und als Automatisierungslösung fungierende Anwenderprogramme auf Seiten des Automatisierungsgerätes mit einem dortigen und branchenspezifisch angepassten Werkzeug, nämlich einem Lader, geladen und anschließend zur Ausführung gelangen können.

Das hier vorgeschlagene Verfahren eröffnet also die Möglichkeit, insbesondere Entwicklungsumgebungen (Engineeringsysteme) mit ihren (Programm-)Editoren, Compilern, Ladern, etc. sowie Laufzeitsysteme von Automatisierungsgeräten der Automatisierungstechnik mit Hilfe eines Registrier- und Vermittlungsmechanismus derart auszustatten, dass branchenspezifische Lösungen für ein Automatisierungsgerät generisch integriert und generiert werden können.

Die Funktionalität des dafür vorgesehenen Computerprogramms 20 kann schlagwortartig auch als Industry Automation Broker bezeichnet werden. Das Computerprogramm 20 macht branchenspezifische Funktionalität, also Softwaremodule wie oben beschrieben, aber auch Generatoren, eben in Abhängigkeit von der gewählten Branche verfügbar. Das Computerprogramm 20 (der Industry Automation Broker) lässt sich in bestehende Software- und Firmwarearchitekturen integrieren und kann dabei ein- oder mehrstufig arbeiten. Vorteilhaft kann dieses Verfahren gemäß der Aufgabenstellung eingesetzt werden, um einen Typ von Automatisierungsgerät (z.B. SPS) für mehrere Einsatzbereiche und Branchen anwendbar zu machen. Spezielle softwaretechnische Branchenpakete und Komponenten (Softwaremodule 46 und Konfigurationsdatensätze 48) werden dafür gemäß einer geeigneten Dienststruktur definiert, sie registrieren sich (typischerweise im Zuge der Software-Installation), um am nachstehenden Verteil- und Vermittlungsmechanismus teilnehmen zu können.

Insbesondere ist es auch möglich, die automatisierungstechnischen Clients 16, 18, also eine Entwicklungsumgebung oder Funktionalitäten innerhalb der Entwicklungsumgebung, nämlich Programme wie Editoren, Compiler, Lader, Generatoren, etc. und/oder des Laufzeitsystems eines Automatisierungsgeräts mit einem sogenannten Broker auszustatten, der hier neuartig die Verteilung bzw. Vermittlung anhand der registrierten branchenspezifischen Komponenten vornimmt. Die branchenspezifische Konfiguration eines automatisierungstechnischen Clients 16, 18 kann also einmal mit einer externen Einheit, nämlich dem Computer 10, erfolgen. Die branchenspezifische Konfiguration wird dann quasi in den jeweiligen automatisierungstechnischen Client 16, 18 "abgefüllt". Die branchenspezifische Konfiguration eines automatisierungstechnischen Clients 16, 18 kann genauso auch durch den jeweiligen Client 16, 18 selbst erfolgen. Die branchenspezifische Anpassung wird dann durch den jeweiligen Client 16, 18 aus externen Datenbeständen (Branchendatenbasis 28 oder ggf. Branchendatenbasis 28 und Konfigurationsdatenbasis 44) abgerufen. In jedem Fall erfolgt die Verteilung eines Dienstes (Softwaremodul 46 und/oder Konfigurationsdatensatz 48) an die branchenspezifische Komponente zum Beispiel für ein konkretes Automatisierungsgerät jeweils abhängig davon, für welche ausgewählte Branche bzw. welches Anwendungsgebiet das Automatisierungsgerät eingesetzt werden soll. Auf diese Art und Weise kann ein Automatisierungsgerätetyp für mehrere Branchen eingesetzt und trotzdem optimal branchenspezifisch unterstützt werden.

Dieses Verfahren ermöglicht durch die neuartige Softwarearchitektur das generische und dedizierte Integrieren von branchenspezifischen Diensten und vermeidet damit herkömmliche Mehrzwecklösungen. Die Auswahl, für welche Branche bzw. für welches Anwendungsgebiet ein projektiertes Automatisierungsgerät eingesetzt werden soll, kann für jeden Client 16, 18 einzeln oder auch vorteilhaft für ein ganzes Automatisierungsprojekt vom Anwender festgelegt werden.

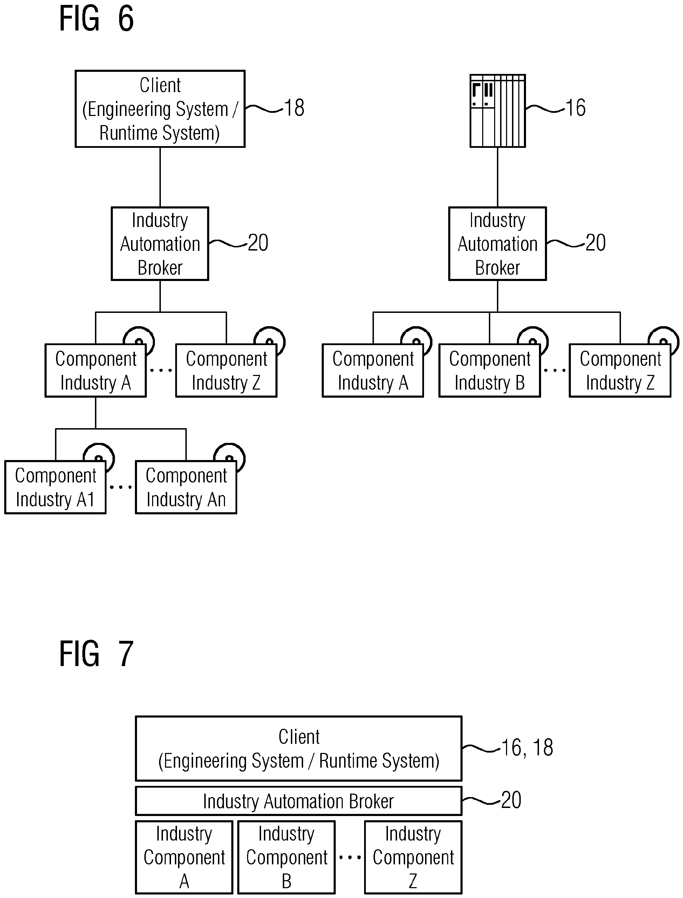

In FIG 6 ist eine Variante zur Ausführungsform gemäß FIG 1 gezeigt. Dargestellt sind, wie in FIG 1, zwei automatisierungstechnische Clients 16, 18. Ein Automatisierungsgerät stellt dabei einen ersten Client 16 dar. Eine Entwicklungsumgebung (Engineeringsystem) oder alternativ eine Laufzeitumgebung (Runtime-System) stellt einen zweiten Client 18 dar. Jeder Client 16, 18 umfasst als Software 20 eine Implementation des hier beschriebenen Verfahrens und ggf. einzelner oder mehrerer Ausgestaltungen, also den "Industry Automation Broker". Die branchenspezifischen Komponenten (Component Industry A ... Component Industry Z; Component Industry A1 ... Component Industry An) sind installations- und registrierfähig. In der Darstellung ist dies durch die hinter jedem Block dargestellten Symbole einer Installations-CD/DVD angedeutet. Die resultierende Softwarearchitektur ist schematisch vereinfacht in FIG 7 gezeigt.

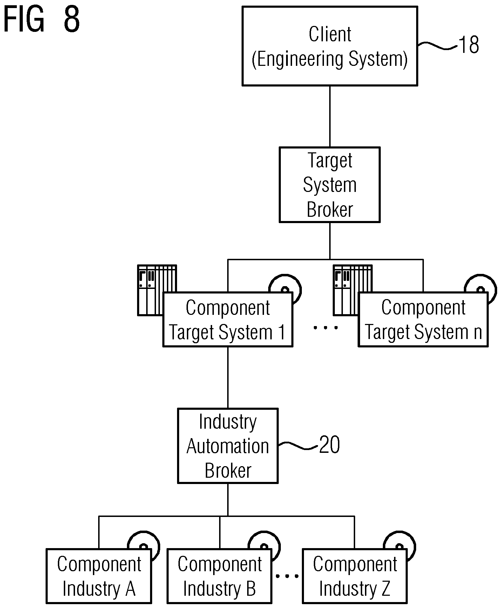

Speziell bei der in FIG 6 dargestellten Ausführungsform kann die Software 20, also der Industry Automation Broker, mit einem im Stand der Technik bekannten Broker-Typ, nämlich einem so genannten Target System Broker (synonym auch Controller Target Broker genannt), oder auch anderen Broker-Typen (z.B. ORB) kombiniert werden. Ein Broker vom Typ Target System Broker verteilt im Gegensatz zum Industry Automation Broker (branchenspezifische Verteilung/Anpassung) in Abhängigkeit vom Gerätetyp. Der Industry Automation Broker kann dabei den anderen Broker-Typen vor- oder auch nachgeschaltet sein, wie dies exemplarisch in FIG 8 gezeigt ist.

Die softwaretechnische Komponentenstruktur für die Branchenpakete muss gemäß den Bedürfnissen und Anforderungen im Rahmen des jeweiligen Laufzeitsystems oder der Entwicklungsumgebung definiert werden. Typische Komponenten und Module für das Betreiben von Automatisierungsgeräten wie eines Steuergeräts oder Prozessrechners sind nachstehend beispielhaft und nicht abschließend aufgeführt. Dabei können branchenspezifische Module grundsätzlich in Form einer softwaretechnischen Implementierung als Komponente (FIG 5: Softwaremodul 46) oder deskriptiv als sogenannter Parametersatz (FIG 5: Konfigurationsdatensatz 48) eingebracht werden:
- Spezielle Workflows (also zum Beispiel eine Benutzerführung in Abhängigkeit von einer in der jeweiligen Branche üblichen Arbeitsweise))
- Spezielle Nomenklatur, Layouts und Symbolik für UI (Benutzerschnittstelle/User Interface) der Software-Werkzeuge
- Spezieller Datentypsatz gemäß einem Programmiermodell
- Integration einer branchenspezifischen Bausteinbibliothek
- Integration spezifischer Templates
- Spezieller Parametersatz für Systemleistungen (z.B. mit/ohne STOP - Vermeidungs- oder Deeskalationsstrategie)
- Spezielle Betriebsmittelverwaltung
- Spezielles Änderungsmanagement
- Spezielles Laufzeitsystem bzw. Komponenten für das Laufzeitsystem
- Spezielles Ladeverhalten
- Restriktionen (z.B. bzgl. Programmiermodell)

Auf der Planungsebene für industrielle Anlagen werden von einigen Herstellern auch (template-basierte) Softwaregeneratoren zur Verfügung gestellt. Die branchenspezifische Parametrierung dieser Generatoren kann auch mit Hilfe dieses Verfahrens erfolgen.

Das hier beschriebene Verfahren ist auch für Bedien- und Beobachtungssysteme oder -geräte in der Automatisierungstechnik anwendbar, die damit ebenfalls als automatisierungstechnische Clients 16, 18 in Betracht kommen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Einzelne im Vordergrund stehende Aspekte der hier eingereichten Beschreibung lassen sich damit kurz wie folgt zusammenfassen:
Angegeben werden ein Verfahren, ein Computerprogramm und ein Computer mit einem solchen Computerprogramm zur branchenspezifischen Konfiguration eines automatisierungstechnischen Clients 16, 18, wobei in einen Speicher 24 des Clients 16, 18 eine Software 26 geladen wird, welche eine Funktionalität des Clients 16, 18 bestimmt, wobei zum Zusammenstellen und/oder Konfigurieren der in den Speicher 24 des Clients 16, 18 zu ladenden Software 26 eine Branchendatenbasis 28 und eine vorgebbare, eine Branche spezifizierende Kennung 22 ausgewertet werden, wobei die Kennung 22 kodiert, für welche Branche die branchenspezifische Konfiguration des Clients 16, 18 erfolgen soll, wobei die Branchendatenbasis 28 branchenspezifische Einträge 30 umfasst, wobei die Kennung 22 in den branchenspezifischen Einträgen 30 automatisch gesucht wird, wobei anhand eines als zur Kennung 22 zugehörig ermittelten branchenspezifischen Eintrags 30 eine Auswahl und/oder Konfiguration der in den Speicher 24 des Clients 16, 18 zu ladenden Software 26 erfolgt und wobei die Software 26 automatisch in den Speicher 24 des Clients 16, 18 geladen wird.

## Patentansprüche

1. Verfahren zur branchenspezifischen Konfiguration eines automatisierungstechnischen Clients (16, 18),
wobei in einen Speicher (24) des Clients (16, 18) eine Software (26) geladen wird, welche eine Funktionalität des Clients (16, 18) bestimmt, wobei
- zum Zusammenstellen und/oder Konfigurieren der in den Speicher (24) des Clients (16, 18) zu ladenden Software (26) eine Branchendatenbasis (28) und eine vorgebbare, eine Branche spezifizierende Kennung (22) ausgewertet werden,
- die Kennung (22) kodiert, für welche Branche die branchenspezifische Konfiguration des Clients (16, 18) erfolgen soll,
- die Branchendatenbasis (28) branchenspezifische Einträge (30) umfasst,
- die Kennung (22) in den branchenspezifische Einträgen (30) automatisch gesucht wird,
- anhand eines als zur Kennung (22) zugehörig ermittelten branchenspezifischen Eintrags (30) eine Auswahl und/oder Konfiguration der in den Speicher (24) des Clients (16, 18) zu ladenden Software (26) erfolgt und
- die Software (26) automatisch in den Speicher (24) des Clients (16, 18) geladen wird.

2. Verfahren nach Anspruch 1, wobei die branchenspezifischen Einträge (30) in der Branchendatenbasis (28) hierarchisch strukturiert sind.

3. Verfahren nach Anspruch 2, wobei die branchenspezifischen Einträge (30) zur hierarchischen Strukturierung in einem softwaretechnischen Baum (40) organisiert sind.

4. Verfahren nach einem der Ansprüche 2 oder 3, wobei bei hierarchisch strukturierten Einträgen (30) die Auswahl und/oder Konfiguration der in den Speicher (24) des Clients (16, 18) zu ladenden Software (26) anhand des als zur Kennung (22) zugehörig ermittelten Eintrags (30) und jedes diesem Eintrag (30) hierarchisch übergeordneten Eintrags (30) erfolgt.

5. Verfahren nach einem der vorangehenden Ansprüche, wobei anhand der vorgegebenen Kennung (22) und der Branchendatenbasis (28) ein erster und ein zweiter automatisierungstechnischer Client (16, 18), nämlich ein Automatisierungsgerät als erster Client (16, 18) und eine Entwicklungsumgebung als zweiter Client (16, 18), konfiguriert werden.

6. Verfahren nach einem der vorangehenden Ansprüche, wobei
- zur Konfiguration eines oder mehrerer automatisierungstechnischer Clients (16, 18) eine Konfigurationsdatenbasis (44) verwendet wird, die Softwaremodule (46) und Konfigurationsdatensätze (48) umfasst, und
- ein oder mehrere Softwaremodule (46) und/oder ein oder mehrere Konfigurationsdatensätze (48) aus der Konfigurationsdatenbasis (44) anhand der Kennung (22) oder eines dazu ermittelten Eintrags (30) der Branchendatenbasis (28) oder hierarchisch übergeordneter Einträge (30) ausgewählt und zur Konfiguration des Clients (16, 18) verwendet werden.

7. Verfahren nach Anspruch 6, wobei die Konfigurationsdatenbasis (44) als Softwaremodule (46) auch Werkzeuge, insbesondere Editoren, Compiler und Lader, umfasst und wobei auch solche Werkzeuge für die Konfiguration eines Clients (16, 18) verwendet werden.

8. Computerprogramm (20) mit Programmcode-Mitteln, um alle Schritte von jedem beliebigen der Ansprüche 1 bis 7 durchzuführen, wenn das Programm auf einem Computer (10) zur branchenspezifischen Konfiguration eines automatisierungstechnischen Clients (16, 18) ausgeführt wird.

9. Digitales Speichermedium mit elektronisch auslesbaren Steuersignalen, die so mit einem Computer (10) zur branchenspezifischen Konfiguration eines automatisierungstechnischen Clients (16, 18) zusammenwirken können, dass ein Verfahren nach einem der Ansprüche 1 bis 7 ausgeführt wird.

10. Computer (10) zur branchenspezifischen Konfiguration eines automatisierungstechnischen Clients (16, 18) mit einer Verarbeitungseinheit (12) und einem Speicher (14), in den ein Computerprogramm (20) nach Anspruch 8 geladen ist, das im Betrieb des Computers (10) durch die Verarbeitungseinheit (12) ausgeführt wird.
